# EUROPEAN PATENT APPLICATION

(11) **EP 4 779 059 A1**
(43) Date of publication of application: **22.07.2026**
(21) Application number: 24882689.3
(22) Date of filing: 04.10.2024
(51) Int. Cl.: C25B 13/02, C25B 13/08, C25B 1/04, C25B 9/23, C25B 11/081, C25B 11/075

(54) **ION EXCHANGE MEMBRANE AND ELECTROCHEMICAL SYSTEM COMPRISING ION EXCHANGE MEMBRANE**

(30) Priority: 26.10.2023 KR 20230144774
(71) Applicant: Hanwha Solutions Corporation, Jung-gu Seoul 04541 (KR)
(72) Inventor: KIM, Yong Min, Daejeon 34128 (KR); LEE, Ki Sub, Daejeon 34128 (KR); LEE, Su Bin, Daejeon 34128 (KR); KU, Il Hwae, Daejeon 34128 (KR); CHO, Yoon Hwan, Daejeon 34128 (KR)
(74) Representative: Berggren Oy
(86) International application number: PCT/KR2024/015041
(87) International publication number: WO 2025/089661

(57) **Abstract**

The present disclosure relates to an ion exchange membrane and an electrochemical system comprising the ion exchange membrane. The ion exchange membrane according to the present disclosure can maintain high ion conductivity and durability, and has high gas barrier properties, thereby realizing an electrochemical system with excellent efficiency.

## Description

### [TECHNICAL FIELD]

### CROSS-REFERENCE TO RELATED APPLICATION(S)

This application claims priority to and the benefit of Korean Patent Application No. 10-2023-0144774, filed on October 26, 2023, with the Korean Intellectual Property Office, the disclosure of which is incorporated herein in its entirety by reference.

The present disclosure relates to an ion exchange membrane and an electrochemical system comprising the ion exchange membrane.

### [BACKGROUND]

Recently, as the problem of climate change due to global warming has become serious, interest has been focused on studying alternative energy sources to reduce greenhouse gas emissions.

Among them, polymer electrolyte membrane fuel cells and water electrolysis are pollution-free systems that utilize the energy of a chemical reaction between hydrogen and oxygen, which have high output density and energy conversion efficiency and can be reduced in size, thereby making it possible to be used in a wide range of applications, such as portable power sources for mobile communication devices, transportation power sources for automobiles, and power generation systems for home and military use.

Separation membranes may be very important elements in fuel cells and water electrolysis, and such separation membranes must have high ion conductivity, chemical, thermal, mechanical and electrochemical stability, and also play a role in effectively shutting off the movement of substances between a positive electrode and a negative electrode.

Water electrolysis is a technology that electrochemically decomposes water to produce hydrogen and oxygen. In the anion exchange membrane-based water electrolysis (AEMWE) method, the unit cell includes an anion exchange membrane, a negative electrode formed on one side of the anion exchange membrane, and a positive electrode formed on the other side of the anion exchange membrane.

A plurality of the unit cells are stacked in series to form a water electrolysis stack, and the water electrolysis stack receives an alkaline solution from an electrolyte tank, decomposes water, and generates hydrogen and hydroxide ions at the positive electrode. The hydroxide ions generated here are transferred to the other side via an anion exchange membrane, and the negative electrode causes an electrochemical reaction in which oxygen is generated from the hydroxide ions.

In this case, the anion exchange membrane is an intermediate electrolyte membrane, which must have high hydroxide ion conductivity, and at the same time, does not permeate hydrogen and oxygen generated by water electrolysis.

When an anion exchange membrane is used in the electrochemical system described above, it can be operated under relatively high pH conditions, and therefore, there is an advantage that a low-cost catalyst can be used instead of a conventional expensive platinum-based precious metal catalyst, thereby reducing the overall operating costs of the system.

However, since the anion exchange membrane used in the electrochemical system based on the anion exchange membrane has low anion conductivity, high gas permeability, and low durability, research on this is necessary.

### [DETAILED DESCRIPTION OF THE INVENTION]

### [Technical Problem]

There is provided an ion exchange membrane having high anion conductivity, low gas permeability, and excellent durability.

There is also provided an electrochemical system including the ion exchange membrane.

### [Technical Solution]

According to an aspect of the present disclosure, there is provided an ion exchange membrane including: a catalyst layer containing a hydration reaction catalyst, and an ion conductive insulating layer.

According to an embodiment, the ion conductive insulating layer may include a first ion conductive insulating layer and a second conductive insulating layer.

According to an embodiment, the ion exchange membrane may include a catalyst layer containing a hydration reaction catalyst, a first ion conductive insulating layer formed on one surface of the catalyst layer; and a second ion conductive insulating layer formed on the other surface of the catalyst layer.

According to an embodiment, the catalyst layer may be present in the form shut off from the outside by the ion conductive insulating layer.

According to an embodiment, the ion exchange membrane may include a first ion conductive insulating layer; a second ion conductive insulating layer formed on the first ion conductive insulating layer; and a catalyst layer formed on the second conductive insulating layer.

According to an embodiment, the ion exchange membrane may further include a strength reinforcing layer.

According to an embodiment, the strength reinforcing layer may include a porous polymer membrane.

According to an embodiment, the catalyst layer may include a hydration reaction catalyst and an anionic ionomer.

According to an embodiment, the hydration reaction catalyst may include at least one selected from the group consisting of a platinum-based catalyst, a palladium-based catalyst, a rhodium-based catalyst, a ruthenium-based catalyst, a nickel-based catalyst, a copper-based catalyst, a cobalt-based catalyst, a tin-based catalyst, a palladium-based catalyst, and an iridium-based catalyst.

According to an embodiment, the ion conductive insulating layers may include an anionic ionomer.

According to an embodiment, the catalyst layer may have a thickness of 1 to 40 *µ*m.

According to an embodiment, the ion exchange membrane may have a thickness of 80 to 100*µ*m.

According to an embodiment, the thickness of the catalyst layer may be 0.01 to 0.5 relative to the total thickness of the ion exchange membrane.

According to an embodiment, the catalyst content in the catalyst layer may be 1 to 2 wt.%.

Meanwhile, according to another aspect of the present disclosure, there is provided an electrochemical system including the ion exchange membrane, a negative electrode and a positive electrode.

The terms "first," "second," etc. are used herein to explain various elements, and these terms are only used to distinguish one constitutional element from the other constitutional elements.

The technical terms used herein is only to explain exemplary embodiments and is not intended to limit the scope of the present disclosure.

The singular forms "a," "an" and "the" are intended to include plural forms, unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

In the present disclosure, in case a layer or an element is mentioned to be formed "on" or "above" layers or elements, it means that the layer or element is directly formed on the layers or elements, or it means that other layers or elements may be additionally formed between the layers, on a subject, or on a substrate.

Although the present disclosure may have various forms and various modifications may be made thereto, specific examples will be exemplified and explained in detail below. However, it is not intended to limit the present disclosure to specific disclosure, and it should be understood that the present disclosure includes all the modifications, equivalents or replacements thereof without departing from the spirit and technical scope of the present disclosure.

Now, the present disclosure will be described in more detail.

According to an aspect of the present disclosure, there is provided an ion exchange membrane comprising: a catalyst layer containing a hydration reaction catalyst, and an ion conductive insulating layer.

The present inventors have found that when a catalyst layer containing a hydration reaction catalyst is added to a conventional ion exchange membrane including an ion conductive insulating material, gases such as hydrogen or oxygen that have permeated the ion exchange membrane are hydrated by a catalyst, thereby further improving gas barrier properties, and completed the present disclosure.

According to an aspect of the present disclosure, there is provided an ion exchange membrane comprising: a catalyst layer containing a hydration reaction catalyst, and an ion conductive insulating layer.

According to an embodiment, the ion exchange membrane may include a plurality of ion conductive insulating layers. Specifically, the ion conductive insulating layers may include a first ion conductive insulating layer and a second ion conductive insulating layer.

The plurality of ion conductive insulating layers may be present adjacent to each other or may be present spaced apart from each other within the ion exchange membrane.

According to an embodiment, the ion exchange membrane may include a catalyst layer containing a hydration reaction catalyst, a first ion conductive insulating layer formed on one surface of the catalyst layer; and a second ion conductive insulating layer formed on the other surface of the catalyst layer.

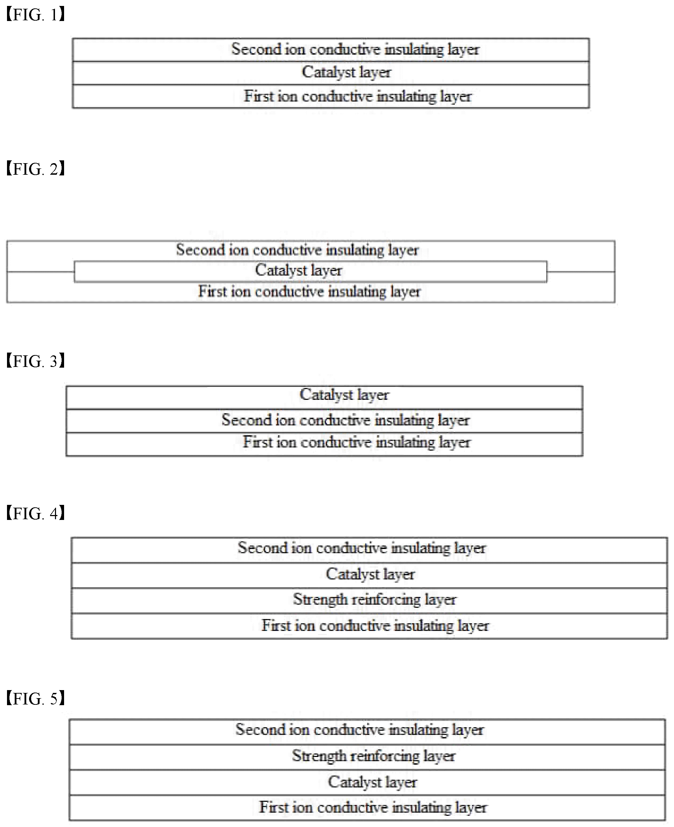

FIG. 1 is a schematic diagram of an ion exchange membrane according to an embodiment of the present disclosure.

Referring to FIG. 1, one form of an ion exchange membrane can be confirmed, comprising a catalyst layer containing a hydration reaction catalyst, a first ion conductive insulating layer formed on one surface of the catalyst layer; and a second ion conductive insulating layer formed on the other surface of the catalyst layer.

According to an embodiment, the catalyst layer may be present in the form shut off from the outside by the ion conductive insulating layer.

FIG. 2 is a schematic diagram of an ion exchange membrane according to an embodiment of the present disclosure.

Referring to FIG. 2, it can be confirmed that in the ion exchange membrane comprises a catalyst layer containing a hydration reaction catalyst, a first ion conductive insulating layer formed on one surface of the catalyst layer; and a second ion conductive insulating layer formed on the other surface of the catalyst layer, the catalyst layer is present in the form of being shut off or cut off from the outside by the ion conductive insulating layer.

According to another embodiment, the ion exchange membrane may comprise a first ion conductive insulating layer; a second ion conductive insulating layer formed on the first ion conductive insulating layer; and a catalyst layer formed on the second conductive insulating layer.

FIG. 3 is a schematic diagram of an ion exchange membrane according to an embodiment of the present disclosure.

Referring to FIG. 3, one form of an ion exchange membrane can be confirmed, comprising a first ion conductive insulating layer; a second ion conductive insulating layer formed on the first ion conductive insulating layer; and a catalyst layer formed on the second conductive insulating layer.

In this case, the catalyst layer may be present in the form exposed to the outside without being shut off from the outside by the ion conductive insulating layer.

According to an embodiment, the ion exchange membrane may further comprise a strength reinforcing layer.

Such a strength reinforcing layer may be present in the form of being interposed between different ion-conductive insulating layers, or between the ion conductive insulating layer and the catalyst layer.

FIG. 4 is a schematic diagram of an ion exchange membrane according to an embodiment of the present disclosure.

Referring to FIG. 4, it can be confirmed that in the ion exchange membrane comprising a catalyst layer containing a hydration reaction catalyst, a first ion conductive insulating layer formed on one surface of the catalyst layer; and a second ion conductive insulating layer formed on the other surface of the catalyst layer, a strength reinforcing layer is interposed between the catalyst layer and the first ion conductive insulating layer.

FIG. 5 is a schematic diagram of an ion exchange membrane according to an embodiment of the present disclosure.

Referring to FIG. 5, it can be confirmed that in the ion exchange membrane comprising a catalyst layer containing a hydration reaction catalyst, a first ion conductive insulating layer formed on one surface of the catalyst layer; and a second ion conductive insulating layer formed on the other surface of the catalyst layer, a strength reinforcing layer is interposed between the catalyst layer and the first ion conductive insulating layer.

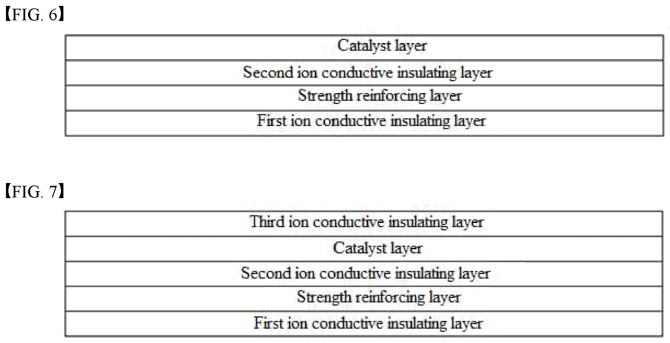

FIG. 6 is a schematic diagram of an ion exchange membrane according to an embodiment of the present disclosure.

Referring to FIG. 6, it can be confirmed that in the ion exchange membrane comprising a first ion conductive insulating layer; a second ion conductive insulating layer formed on the first ion conductive insulating layer; and a catalyst layer formed on the second conductive insulating layer, a strength reinforcing layer is interposed between the first ion conductive insulating layer and the second ion conductive insulating layer.

FIG. 7 is a schematic diagram of an ion exchange membrane according to an embodiment of the present disclosure.

Referring to FIG. 7, one form of an ion exchange membrane can be confirmed, comprising a first ion conductive insulating layer, a strength reinforcing layer formed on the first ion conductive insulating layer, a second ion conductive insulating layer formed on the strength reinforcing layer, a catalyst layer formed on the second ion conductive insulating layer, and a third ion conductive insulating layer formed on the catalyst layer.

According to an embodiment, the strength reinforcing layer may include a porous polymer membrane.

Specifically, such a porous polymer membrane may include a porous polymer membrane including at least one polymer selected from a group consisting of polyolefin-based and fluorinated polyolefin-based (PTFE, etc.) polymers.

In addition, when a strength reinforcing layer is used, this strength reinforcing layer may be formed in the form impregnated with an anionic ionomer, and may be realized in the form that maintains ion conductivity with an adjacent ion conductive insulating layer, etc. This is intended to maintain ion conductivity throughout the ion exchange membrane.

According to an embodiment, the catalyst layer may include a hydration reaction catalyst and an anionic ionomer. This is intended to maintain ion conductivity throughout the ion exchange membrane. Specifically, the catalyst layer may be in the form in which the hydration reaction catalyst material is dispersed in an anionic ionomer.

According to an embodiment, the hydration reaction catalyst may include at least one selected from the group consisting of a platinum-based catalyst, a palladium-based catalyst, a rhodium-based catalyst, a ruthenium-based catalyst, a nickel-based catalyst, a copper-based catalyst, a cobalt-based catalyst, a tin-based catalyst, a palladium-based catalyst, and an iridium-based catalyst. However, the present disclosure is not necessarily limited to the material composition of such a catalyst, and as long as the catalyst is a hydration catalyst commonly used in the technical field to which the present disclosure pertains, it can be used without particular limitation for the purpose of removing oxygen or hydrogen gas that permeates the ion exchange membrane through a hydration reaction.

According to an embodiment, the ion conductive insulating layer may include an anionic ionomer.

The anionic ionomer mentioned herein is a material having a functional group capable of transferring anions in the form of quaternary ammonium cations. Specifically, the anionic ionomer may include carbazole.

According to an embodiment, the thickness of the catalyst layer may be about 1 to about 40 *µ*m. If the thickness of the catalyst layer is too thick, there is a problem that the costs increase due to the addition of catalyst, and it may cause a disadvantage of acting as resistance during anion conduction. If the thickness of the catalyst layer is too thin, there may be a problem that the probability of hydrogen permeating the membrane being adsorbed decreases, and the hydrogen permeability increases.

According to an embodiment, the ion exchange membrane may have a thickness of about 80 to about 100 *µ*m. If the thickness of the entire ion exchange membrane is too thick, there is a problem that the resistance of the membrane become high, which may reduce the performance of the entire system, and the cost may increase because a lot of materials must be used. If the thickness is too thin, there is a problem that hydrogen generated by the electrochemical reaction of water is permeated through the membrane in large amounts, which may increase the risk of explosion of the battery system.

According to an embodiment, the strength reinforcing layer may have a thickness of about 5 to about 15*µ*m. If the thickness of the strength reinforcing layer is too thick, there is a problem that impregnation of the ionomer is insufficient, and the strength reinforcing layer may act as resistance in the membrane, which may deteriorate the performance of the entire system. If the thickness is too thin, problems such as cracks and breakage due to shrinkage and expansion of the membrane may occur.

According to an embodiment, the thickness of the catalyst layer may be realized in a ratio of about 0.01 to about 0.5 relative to the total thickness of the ion exchange membrane. If the thickness of the catalyst layer is too thick relative to the entire thickness of the ion exchange membrane, it may be difficult to uniformly disperse the catalyst in the catalyst layer, which may result in a problem that the catalyst content becomes higher. If the thickness of the catalyst layer is too thin relative to the total thickness of the ion exchange membrane, there may be a problem that hydrogen permeability becomes higher.

According to an embodiment, the catalyst content in the catalyst layer may be about 1 to about 2 wt.% or less relative to the ionomer. If the catalyst content in the catalyst layer is too low, there may be a problem that the membrane must be produced thickly in order to increase the catalyst content per unit area of the membrane. If the catalyst content in the catalyst layer is too high, there may be a problem that the resistance increases and the performance of the entire system decreases.

Meanwhile, such an ion exchange membrane may be produced by the following method.

First, the ion conductive insulating layer may be formed by an anionic ionomer. The anionic ionomer may be used by itself, or may be used in the form of an anionic ionomer composition together with a dispersant or a solvent.

The catalyst layer may be formed by a catalyst composition in which a hydration reaction catalyst is dispersed in the anionic ionomer.

When applying an anionic ionomer, a general method used in forming a coating layer in the technical field to which the present disclosure belongs, such as bar coating or spray coating, can be used.

When the ion exchange membrane comprises a catalyst layer containing a hydration reaction catalyst, a first ion conductive insulating layer formed on one surface of the catalyst layer; and a second ion conductive insulating layer formed on the other surface of the catalyst layer, it can be produced by the following method.

First, an anionic ionomer, or a composition containing an anionic ionomer is applied to a release film. This is then dried to form a first ion conductive insulating layer.

Then, a catalyst composition in which a hydration reaction catalyst is dispersed in an ionic ionomer is applied onto the first ion conductive insulating layer. At this time, the content of the catalyst in the catalyst composition is as described above. This is then dried to form a catalyst layer.

Then, an anionic ionomer or a composition containing an anionic ionomer is applied again onto the catalyst layer. This is then dried to form a second ion conductive insulating layer.

The drying may proceed under a condition of about 80 °C for about 50 minutes, and can be carried out by natural drying or heat drying depending on the type and amount of the solvent used.

By this method, it is possible to produce an ion exchange membrane having a three-layered structure, in which a catalyst layer is interposed between first and second ion conductive insulating layers.

When the ion exchange membrane includes a first ion conductive insulating layer; a second ion conductive insulating layer formed on the first ion conductive insulating layer; and a catalyst layer formed on the second conductive insulating layer, it can be produced by the following method.

First, an anionic ionomer, or a composition containing an anionic ionomer is applied to a release film. This is then dried to form a first ion conductive insulating layer.

Then, an anionic ionomer, or a composition containing an anionic ionomer is applied onto the first ion-conductive insulating layer. This is then dried to form a second ion conductive insulating layer.

Then, a catalyst composition in which a hydration reaction catalyst is dispersed in an ionic ionomer is applied onto the second ion-conductive insulating layer. At this time, the content of the catalyst in the catalyst composition depends on those described above. This is then dried to form a catalyst layer.

The drying may proceed under a condition of about 80 °C for about 50 minutes, and can be carried out by natural drying or heat drying depending on the type and amount of the solvent used.

By this method, it is possible to produce an ion exchange membrane having a three-layered structure, in which a catalyst layer is exposed to the outside.

When the ion exchange membrane further includes a strength reinforcing layer, it can be produced by the following method.

First, an anionic ionomer, or a composition containing an anionic ionomer is applied to a release film. Then, before the anionic ionomer is completely dried, a porous polymer membrane for forming a strength reinforcing layer is introduced, thereby allowing the anionic ionomer that has not yet dried to be impregnated into the porous polymer membrane. This is then dried to form a first ion conductive insulating layer, and a strength reinforcing layer formed on the first conductive insulating layer.

Then, a catalyst composition in which a hydration reaction catalyst is dispersed in the ionic ionomer is applied onto the strength reinforcing layer. At this time, the content of the catalyst in the catalyst composition depends on those described above. This is then dried to form a catalyst layer.

Then, an anionic ionomer, or a composition containing an anionic ionomer is applied again onto the catalyst layer. This is then dried to form a second ion conductive insulating layer.

The drying may proceed under a condition of about 80 °C for about 50 minutes, and can be carried out by natural drying or heat drying depending on the type or amount of solvent used.

By this method, it is possible to produce an ion exchange membrane having a four-layered structure, in which a catalyst layer is interposed between first and second ion conductive insulating layers, and a strength reinforcing layer is interposed between the catalyst layer and the first ion conductive insulating layer.

When the ion exchange membrane is formed to include a first ion conductive insulating layer; a second ion conductive insulating layer formed on the first ion conductive insulating layer; and a catalyst layer formed on the second conductive insulating layer, and a strength reinforcing layer is interposed between the first ion conductive insulating layer and the second ion conductive insulating layer, it can be produced by the following method.

First, an anionic ionomer, or a composition containing an anionic ionomer is applied to a release film. Then, before the anionic ionomer is completely dried, a porous polymer membrane for forming a strength reinforcing layer is introduced, thereby allowing the anionic ionomer that has not yet dried to be impregnated into the porous polymer membrane. This is then dried to form a first ion conductive insulating layer, and a strength reinforcing layer formed on the first conductive insulating layer.

Then, an anionic ionomer, or a composition containing an anionic ionomer is again applied onto the strength reinforcing layer. This is then dried to form a second ion conductive insulating layer.

A catalyst composition in which a hydration reaction catalyst is dispersed in an ionic ionomer is applied onto the second ion conductive insulating layer. At this time, the content of the catalyst in the catalyst composition depends on those described above. This is then dried to form a catalyst layer.

The drying may proceed under a condition of about 80 °C for about 50 minutes, and may be carried out by natural drying or heat drying depending on the type or amount of solvent used.

By this method, it is possible to produce an ion exchange membrane having a four-layered structure, in which a strength reinforcing layer is interposed between first and second ion conductive insulating layers, and the catalyst layer is exposed to the outside.

When the ion exchange membrane is formed to include a first ion conductive insulating layer, a strength reinforcing layer formed on the first ion conductive insulating layer, a second ion conductive insulating layer formed on the strength reinforcing layer, a catalyst layer formed on the second ion conductive insulating layer, and a third ion conductive insulating layer formed on the catalyst layer, it can be produced by the following method.

First, an anionic ionomer, or a composition containing an anionic ionomer is applied to a release film. Then, before the anionic ionomer is completely dried, a porous polymer membrane for forming a strength reinforcing layer is introduced, thereby allowing the anionic ionomer that has not yet dried to be impregnated into the porous polymer membrane. This is dried to form a first ion conductive insulating layer, and a strength reinforcing layer formed on the first conductive insulating layer.

Then, an anionic ionomer, or a composition containing an anionic ionomer is again applied onto the strength reinforcing layer. This is then dried to form a second ion conductive insulating layer.

A catalyst composition in which a hydration reaction catalyst is dispersed in the ionic ionomer is applied onto the second ion conductive insulating layer. At this time, the content of the catalyst in the catalyst composition depends on those described above. This is then dried to form a catalyst layer.

Separately, an anionic ionomer, or a composition containing an anionic ionomer is applied to a release film, which is then dried to form a third ion conductive insulating layer.

The third ion conductive insulating layer is bonded onto the catalyst layer.

The drying may proceed under a condition of 80 °C for about 50 minutes, and may be carried out by natural drying or heat drying depending on the type or amount of solvent used.

By this method, it is possible to produce an ion exchange membrane having a five-layered structure and formed top comprise a first ion conductive insulating layer, a strength reinforcing layer formed on the first ion conductive insulating layer, a second ion conductive insulating layer formed on the strength reinforcing layer, a catalyst layer formed on the second ion conductive insulating layer, and a third ion conductive insulating layer formed on the catalyst layer.

Meanwhile, according to another aspect of the present disclosure, an electrochemical system comprising an ion exchange membrane, a negative electrode, and a positive electrode is provided.

At this time, the electrochemical system may include a membrane-electrode-assembly (MEA), including an ion exchange membrane, a negative electrode bonded to one surface of the ion exchange membrane, and a positive electrode bonded to the other surface of the ion exchange membrane.

In such a membrane-electrode-assembly or electrochemical system, other components except for the ion exchange membrane, such as a negative electrode, a positive electrode, and an electrolyte, can be those commonly used in the technical field to which the present disclosure belongs, without any particular limitation.

### [Advantageous Effects]

The ion exchange membrane according to the present disclosure can maintain high ion conductivity and durability, and at the same time, has high gas barrier properties, thereby making it possible to realize an electrochemical system with excellent efficiency.

### [BRIEF DESCRIPTION OF THE DRAWINGS]

FIGS. 1 to 7 are schematic diagrams of an ion exchange membrane according to an embodiment of the present disclosure.

### [DETAILED DESCRIPTION OF THE EMBODIMENTS]

Hereinafter, the action and effect of the invention will be described in more detail by way of specific examples. However, these examples are presented for illustrative purposes only, and the scope of the invention is not defined by them.

### <EXAMPLE>

A composition containing 25 wt.% of carbazole and 75 wt.% of N-methyl-pyrrolidone (NMP) was used as the anionic ionomer composition.

A porous polypropylene film was used as the porous polymer membrane for a strength reinforcing layer.

50 wt.% of Pt/C available from TKK was used as the hydration reaction catalyst, and a catalyst composition (1) dispersed in a composition containing 25 wt.% of carbazole and 75 wt.% of N-methyl-pyrrolidone (NMP) at a ratio of 1:100 or a catalyst composition (2) dispersed in a composition containing 25 wt.% of carbazole and 75 wt.% of N-methyl-pyrrolidone (NMP) at a ratio of 2:100 was used.

### Example 1

The anionic ionomer composition was bar-coated onto the release film to a thickness of about 350 *µ*m. Before this was completely dried, a porous polypropylene film was covered and the anionic ionomer composition was impregnated into the porous polypropylene film, which was then dried in a convection oven at about 80 °C for about 50 minutes to form a first ion conductive insulating layer and a strength reinforcing layer.

The catalyst composition (1) was bar-coated onto the strength reinforcing layer to a thickness of about 200 *µ*m, which was then dried in a convection oven at about 80 °C for about 50 minutes to form a catalyst layer.

The anionic ionomer composition was bar-coated on the catalyst layer to a thickness of about 100 *µ*m, which was then dried in a convection oven at about 80 °C for about 50 minutes to form a second ion conductive insulating layer.

### Example 2

The anionic ionomer composition was bar-coated onto the release film to a thickness of about 350 *µ*m. Before this was completely dried, a porous polypropylene film was covered and the anionic ionomer composition was impregnated into the porous polypropylene film, which was then dried in a convection oven at about 80 °C for about 50 minutes to form a first ion conductive insulating layer and a strength reinforcing layer.

The anionic ionomer composition was bar-coated onto the strength reinforcing layer to a thickness of about 200 *µ*m, which was then dried in a convection oven at about 80 °C for about 50 minutes to form a second ion conductive insulating layer.

The catalyst composition (2) was bar-coated on the second ion conductive insulating layer to a thickness of about 100 *µ*m, which was then dried in a convection oven at about 80 °C for about 50 minutes to form a catalyst layer.

Separately, the anionic ionomer composition was bar-coated onto the release film to a thickness of about 100 *µ*m, which was then dried in a convection oven at about 80 °C for about 50 minutes to form a third ion conductive insulating layer.

The third ion conductive insulating layer was placed on the catalyst layer, laminated using a roll press under the conditions of 120 °C, 30 MPa, and 0.2 m/min, and then the release film was removed.

### Example 3

The anionic ionomer composition was bar-coated onto the release film to a thickness of about 400 *µ*m. Before this was completely dried, a porous polypropylene film was covered and the anionic ionomer composition was impregnated into the porous polypropylene film, which was then dried in a convection oven at about 80 °C for about 50 minutes to form a first ion conductive insulating layer and a strength reinforcing layer.

The anionic ionomer composition was bar-coated onto the strength reinforcing layer to a thickness of about 200 *µ*m, which was then dried in a convection oven at about 80 °C for about 50 minutes to form a second ion conductive insulating layer.

The catalyst composition (1) was bar-coated onto the second ion conductive insulating layer to a thickness of about 200 *µ*m, which was then dried in a convection oven at about 80 °C for about 50 minutes to form a catalyst layer.

### Comparative Example 1

The anionic ionomer composition was bar-coated onto the release film to a thickness of about 400 *µ*m. Before this was completely dried, a porous polypropylene film was covered, and the anionic ionomer composition was impregnated into the porous polypropylene film, which was then dried in a convection oven at about 80°C for about 50 minutes to form a first ion conductive insulating layer and a strength reinforcing layer.

The anionic ionomer composition was bar-coated onto the strength reinforcing layer to a thickness of about 400 *µ*m, which was then dried in a convection oven at about 80 °C for about 50 minutes to form a second ion conductive insulating layer.

### Preparation of membrane-electrode-assembly

The membranes produced in Examples and Comparative Examples were stacked with a hydrogen generating electrode and an oxygen generating electrode, and bonded under the conditions of 120 °C, 30 MPa, and 0.2 m/min using a roll press to prepare a membrane-electrode assembly. The electrode area was fabricated to be 100 cm².

### Hydrogen Permeation Evaluation

When the current density of the electrolysis stack was maintained at 1.5 A/cm² while circulating a 1M KOH aqueous solution at 60 °C, the concentration of hydrogen present in the oxygen generated at the oxygen generation electrode was measured. Theoretically, hydrogen cannot be generated on the oxygen generating electrode side, but hydrogen generated on the hydrogen generating electrode side, which is a side opposite to the membrane, can permeate the membrane and move to the oxygen generating electrode side, thereby making it possible to detect hydrogen.

The hydrogen concentration was measured with a sensor installed to TEST STATION available from CNL.

The results are summarized in Table below.

**[Table 1]**

| | Example 1 | Example 2 | Example 3 | Comparative Example 1 |
|---|---|---|---|---|
| H₂ concentration (%) | 0.805 | 0.77 | 1.09 | 2.61 |

In the case of Comparative Example, the concentration of hydrogen in the gas generated from the oxygen generation electrode was measured to be about 2.61%.

In contrast, in the case of Examples 1 to 3, it was confirmed that the concentration of hydrogen in the gas generated from the oxygen generation electrode was about 0.8% to about 1.09%, which was reduced by about 60 to about 70% compared to Comparative Example.

This is considered to be caused by the fact that hydrogen that has penetrated into the inside of the membrane is hydrated by the hydration reaction catalyst present inside the ion exchange membrane according to one embodiment of the present disclosure, and thus is unable to pass through the membrane.

## Claims

1. An ion exchange membrane comprising:
a catalyst layer containing a hydration reaction catalyst, and
an ion conductive insulating layer.

2. The ion exchange membrane according to claim 1, wherein the ion conductive insulating layer comprises a first ion conductive insulating layer and a second ion conductive insulating layer.

3. The ion exchange membrane according to claim 1, comprising:
a catalyst layer containing a hydration reaction catalyst,
a first ion conductive insulating layer formed on one surface of the catalyst layer; and
a second ion conductive insulating layer formed on the other surface of the catalyst layer.

4. The ion exchange membrane according to claim 1, wherein the catalyst layer is present in the form shut off from the outside by the ion conductive insulating layer.

5. The ion exchange membrane according to claim 1, comprising:
a first ion conductive insulating layer;
a second ion conductive insulating layer formed on the first ion conductive insulating layer; and
a catalyst layer formed on the second conductive insulating layer.

6. The ion exchange membrane according to claim 1, further comprising a strength reinforcing layer.

7. The ion exchange membrane according to claim 6, wherein the strength reinforcing layer comprises a porous polymer membrane.

8. The ion exchange membrane according to claim 1, wherein the catalyst layer comprises a hydration reaction catalyst and an anionic ionomer.

9. The ion exchange membrane according to claim 1, wherein the hydration reaction catalyst comprises at least one selected from the group consisting of a platinum-based catalyst, a palladium-based catalyst, a rhodium-based catalyst, a ruthenium-based catalyst, a nickel-based catalyst, a copper-based catalyst, a cobalt-based catalyst, a tin-based catalyst, a palladium-based catalyst, and an iridium-based catalyst.

10. The ion exchange membrane according to claim 1, wherein each of the ion conductive insulating layers independently comprises an anionic ionomer.

11. The ion exchange membrane according to claim 1, wherein the catalyst layer has a thickness of 1 to 40 *µ*m.

12. The ion exchange membrane according to claim 1, wherein a thickness is 80 to 100 *µ*m.

13. The ion exchange membrane according to claim 1, wherein the thickness of the catalyst layer is 0.01 to 0.5 relative to a total thickness of the ion exchange membrane.

14. The ion exchange membrane according to claim 1, wherein the catalyst content in the catalyst layer is 1 to 2 wt.% relative to the ionomer.

15. An electrochemical system comprising the ion exchange membrane according to claim 1, a negative electrode and a positive electrode.
